# EUROPEAN PATENT APPLICATION

(11) **EP 2 287 505 A1**
(43) Date of publication of application: **23.02.2011**
(21) Application number: 09762460.5
(22) Date of filing: 08.06.2009
(51) Int. Cl.: F16K 31/122, F16K 11/07, F25B 41/04

(54) **CONTROL VALVE AND AIR CONDITIONER EQUIPPED WITH THE VALVE**

(30) Priority: 12.06.2008 JP 2008154073
(71) Applicant: Sanden Corporation, Isesaki-shi Gunma 372-8502 (JP)
(72) Inventor: ISHII, Yutaka, Isesaki-shi Gunma 372-8502 (JP); KOBAYASHI, Makoto, Isesaki-shi Gunma 372-8502 (JP); SHINOHARA, Hironori, Tachikawa-shi Tokyo 109-0001 (JP)
(74) Representative: Prüfer & Partner GbR European Patent Attorneys
(86) International application number: PCT/JP2009/060463
(87) International publication number: WO 2009/151030

(57) **Abstract**

A four-way valve (12) includes a valve housing (14) having a valve chamber (30) inside; connection openings (62, 64, 66) opening in the inner surface of the valve chamber (30); a slide valve element (24) for controling communication between the connection openings (62, 64, 66) according to a sliding position thereof; and a drive mechanism for driving the slide valve element (24),the drive mechanism having a sleeve (80) defining a cylinder bore (86) inside; a piston (78) slidably fitted in the cylinder bore (86); a valve rod (76) attached with the slide valve element (24); a pilot pressure chamber (88) supplied with pilot pressure for sliding the piston (78); and an O-ring (94) supporting the sleeve (80) inside the valve housing (14), the O-ring (94) securing a gap (98) between the outer circumferential surface of the sleeve (80) and the inner circumferential surface of the valve housing (14).

## Description

### Technical Field

The invention relates to a control valve, and more specifically, to a control valve installed in a refrigerant circulation pathway of an air conditioner and an air conditioner equipped with this control valve.

### Background Art

A common air conditioner includes a control valve that is installed in a refrigerant circulation pathway of the air conditioner. This control valve is, for example, a four-way valve. Switching the four-way valve changes the direction of the flow of refrigerant in the refrigerant circulation pathway. The air conditioner thus performs either a cooling or heating operation.

One of the configurations of the four-way valve is disclosed, for example, in Patent Document 1. The four-way valve disclosed in Patent Document 1 has a hollow cylinder, in which a bracket is placed. A piston is connected to each end of the bracket, being slidable within the cylinder. A slide valve element is fixed to the bracket. The cylinder is jointed to four pipes leading into the cylinder.

The pistons, the bracket and the slide valve element reciprocate together within the cylinder. When the pipe arrangement is altered according to a sliding position of the slide valve element, the flow direction of the refrigerant is changed.

### Prior Art Document

### Patent Document

**Patent Document 1** Unexamined Japanese Patent Publication No. 2000-234824

### Summary of the Invention

### Problem to be Solved by the Invention

The cylinder of the four-way valve includes a cylinder bore in which a piston is slidably fitted. The machining of this cylinder bore requires high accuracy in size, circularity, and concentricity of its internal diameter in order to secure a smooth sliding movement of the piston. The installment of the piston in the cylinder also requires high assembly accuracy, or high level of skill of the operator. This makes it difficult to assemble the four-way valve.

Pipes are fixed to the cylinder by soldering or welding, which locally heats the cylinder. In result, there is a chance that the cylinder is deformed by heat in the process of fixing the pipes to the cylinder even though the cylinder is machined with high accuracy. In particular, the heat deformation is prone to take place in a thin part of the cylinder. A peripheral wall of the cylinder bore, which guides the sliding movement of the piston, namely, a guide peripheral wall, is thinner than the other parts of the peripheral wall, to which the pipes are connected. The heat deformation therefore noticeably occurs in the guide peripheral wall.

The heat deformation of the guide peripheral wall hampers the smooth movement of the piston and might destabilize the switching of the four-way valve.

In general, the four-way valve and therefore the cylinder and the slide valve element are made of copper that is excellent in machinability and heat conductivity.

Meanwhile, in recent years, ammonia has been preferred to be used as refrigerant in view of needs to disuse chlorofluorocarbon chemicals.

Copper, however, has a low resistance to ammonia. A copper-made four-way valve therefore cannot be installed in a refrigerant circulation pathway using an ammonia refrigerant.

When the refrigerant is ammonia refrigerant, one possible idea is to use a four-way valve made of aluminum or stainless steel, which has a high resistance to ammonia.

On the other hand, aluminum and stainless steel have lower heat conductivity than copper, and a cylinder made of aluminum or stainless steel is more markedly deformed by heat.

It is an object of the invention to provide a control valve that has a simple structure, is easy to assemble, and is not affected by heat deformation in its switching operation, and also provide an air conditioner having the above control valve.

### Means for Solving the Problem

In order to achieve the object, a control valve of the invention has a valve housing in the shape of a hollow cylinder, the valve housing having a valve chamber defined inside the valve housing and an external wall surrounding the valve chamber; a plurality of port members fixed to the external wall, each of the port members having an opening that opens in an inner face of the valve chamber; a slide valve element placed in the valve chamber and slidable on the inner face of the valve chamber in an axis direction of the valve housing, the slide valve element controlling communication between the openings of the port members according to a sliding position thereof; and a drive mechanism disposed adjacently to the valve chamber within the valve housing, for driving the slide valve element. The drive mechanism includes a sleeve disposed along an axis of the valve housing, the sleeve defining a cylinder bore therein; a movable member slidably fitted in the cylinder bore and connected to the slide valve element; an actuator for sliding the movable member; and a supporting device supporting the sleeve with respect to the valve housing and allowing the sleeve to incline.

With this control valve, the supporting device is located between the valve housing and the sleeve to support the sleeve within the valve housing, and a gap is produced between an outer circumferential surface of the sleeve and an inner circumferential surface of the valve housing. This gap prevents the sleeve and the valve housing from interfering with each other. Since there is no interference between the sleeve and the valve housing, even if the external wall of the valve housing is deformed by heat, it is possible to effectively prevent the cylinder bore from being affected by such deformation. Furthermore, even if machining accuracy of the valve housing is relatively low, this does not hamper the movement of the movable member sliding within the cylinder bore as long as machining accuracy of the sleeve meets a required level. As to measurement of the interior of the valve housing, allowance is made for the gap. Because of this allowance, the movable member is fitted in the valve housing without difficulty, so that an assembling work of the control valve does not require high skill.

Preferably, the sleeve has an open end that opens toward the valve chamber, and an end wall located opposite to the open end, and the supporting device has a support point at which the end wall of the sleeve is supported with respect to the inner surface of the valve housing, and an annular gap defined between the valve housing and the sleeve and extending from the open end of the sleeve to the support point.

With this control valve, since the sleeve is supported only at the end wall side, the sleeve can be set in such a position that the open end side is allowed to eccentrically incline relative to the valve housing. It is then possible to align the axis extending in a sliding direction of the movable member and the axis of the sleeve even if the valve housing is slightly curved.

Preferably, the supporting device has a ring-shaped seal member arranged at the support point.

With this control valve, the ring-shaped seal member makes it possible to surely support the sleeve and maintain airtightness.

Preferably, the supporting device further has a retention groove formed in an outer circumferential surface on the end wall of the sleeve and retaining the seal member. More preferably, the sleeve has a ring-shaped bulging portion formed in the outer circumferential surface of the end wall of the sleeve, and the retention groove is formed in an outer circumferential surface of the bulging portion.

With this control valve, it is easy to produce a gap between the inner circumferential surface of the valve housing and the outer circumferential surface of the sleeve. The sleeve is fitted into the valve housing after being attached with the seal member, so that the control valve is easy to assemble.

Preferably, the control valve comprises three or more port members. More preferably, one of the port members is an introduction port member with an inlet, for introducing fluid into the valve chamber. The other port members are switching port members for switching a flow direction of the fluid by means of the slide valve element, each of the other port members having a connection opening that opens into the valve chamber. The inlet is arranged away from the connection openings in a circumferential direction of the valve housing, whereas the connection openings are arranged in line along the axis of the valve housing. The drive mechanism is disposed each side of the valve chamber, for moving the slide valve element along the axis of the valve housing in opposite directions to each other in order to control connection between the connection openings.

With this control valve, fluid direction control can be conducted as many times as the number of the port members.

To be more specific, the control valve is a four-way valve having three connection openings. The slide valve element has a first switching position for connecting the middle connection opening to either one of the two remaining connection openings, and a second switching position for connecting the middle connection opening to the other of the two remaining connection openings.

With this control valve, a four-way valve hardly affected by heat deformation can be obtained with a relatively simple configuration.

Preferably, the two port members having the two remaining connection openings are inclined relative to an axis of the port member having the middle connection opening, and the connection openings of the two port members are positioned adjacently to the connection opening of the middle port member.

With this control valve, fluid pressure loss is reduced.

Preferably, the movable member has a piston disposed in the cylinder bore, and a piston rod connected to the piston, the piston rod being attached with the slide valve element.

With this control valve, the slide valve element is driven by the reciprocating movement of the piston.

Preferably, the actuator has a pilot pressure chamber formed in the end wall of the sleeve, and the pilot pressure chamber faces the inside of the cylinder bore and is supplied with pilot pressure for driving the piston.

With this control valve, the piston is driven by pilot pressure, so that the position of the slide valve element can be switched with a relatively simple configuration.

Preferably, the port members are mounted on the valve housing by using mounting means that applies heat load to the external wall of the valve housing.

With this control valve, it is relatively easy to mount the port member on the valve housing. The control valve of the invention is so configured as to effectively prevent the driving of the slide valve element from being hampered by heat deformation caused in the valve housing due to heat load. The control valve thus can employ a mounting method that applies heat load.

The air conditioner of the invention has a refrigerant circulation pathway, and the control valve interposed in the circulation pathway and switches the flow direction of the refrigerant circulating through the circulation pathway.

Preferably, the air conditioner further comprising a pilot pressure supply circuit connecting a high-pressure section of the circulation pathway to a selected one of the pilot pressure chambers.

With this air conditioner, it is not required to greatly improve the machining accuracy of the control valve installed in the air conditioner, which reduces manufacturing cost of the air conditioner as a whole. Furthermore, the pilot pressure used for driving the slide valve element is supplied from the high-pressure section of the refrigerant circulation pathway, so that the air conditioner can be configured in a simple way as a whole.

### Advantages of the Invention

With the control valve of the invention, the gap between the outer circumferential surface of the sleeve and the inner circumferential surface of the valve housing allows the control valve to have a simple configuration, the control valve being easy to assemble and not affected by reduction of dimension accuracy, attributable to heat deformation. It is consequently possible to improve production efficiency and reduce manufacturing cost of the control valve as a whole.

With the air conditioner of the invention, since the control valve is provided, it is possible to improve production efficiency and reduce manufacturing cost of the air conditioner as a whole.

### Brief Description of the Drawings

FIG. 1 is a sectional view showing a four-way valve of one embodiment;
FIG. 2 is a sectional view showing in enlarged scale a region inside circle A of FIG. 1;
FIG. 3 is a sectional view along line III-III of FIG. 2; and
FIG. 4 is a sectional view along line IV-IV of FIG. 2.

### Best Mode for Carrying out the Invention

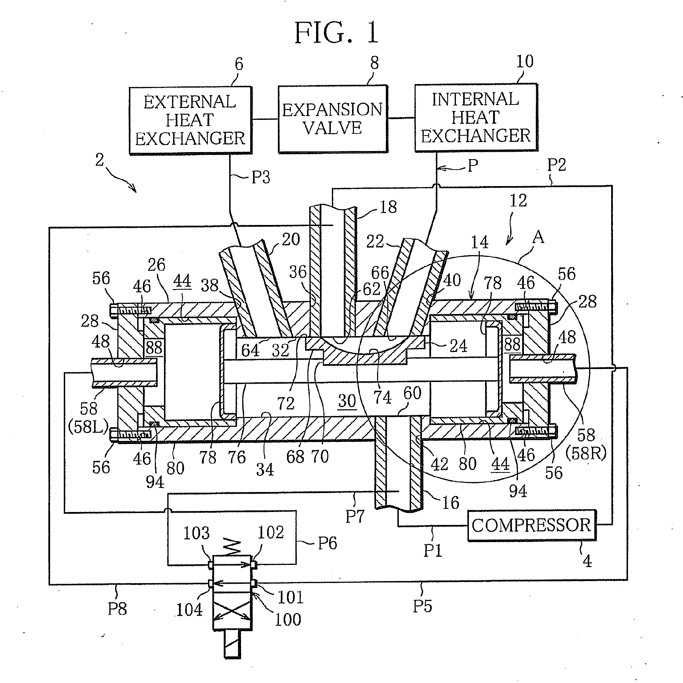

FIG. 1 shows an air conditioner 2 of one embodiment.

The air conditioner 2 has a refrigerant circulation pathway P. A compressor 4, an external heat exchanger 6, an expansion valve 8, an internal heat exchanger 10, a four-way valve 12 serving as a control valve and the like are interposed in the refrigerant circulation pathway P. The air conditioner 2 uses ammonia as refrigerant. Accordingly, devices and pipes within the air conditioner 2, which come into contact with the ammonia refrigerant, including the four-way valve 12, the refrigerant circulation pathway P and the like, are made of aluminum having a high resistance to ammonia. Aluminum includes pure aluminum and aluminum alloy.

The four-way valve 12 includes a valve housing 14, port members 16, 18, 20 and 22 mounted on an external wall of the valve housing 14, a slide valve element 24 that controls communication between the port members, and a drive source that drives the slide valve element 24.

The valve housing 14 has a cylindrical hollow housing body 26 and end plates 28 closing both ends of the housing body 26. The housing body 26 defines a valve chamber 30 inside thereof. The valve chamber 30 is disposed in a middle portion of the housing body 26 as viewed in a direction of a longitudinal axis of the housing body 26. More specifically, an external wall of the housing body 26 includes thick portions 32 and 34 in the middle portion thereof. The thick portions 32 and 34 are located opposite to each other in one diameter direction of the housing body 26, and are protruding from an inner circumferential surface of the housing body 26 into the valve chamber 30. In result, the thick portions 32 and 34 are thicker than other portions of the external wall of the housing body 26. It should be noted that, as is apparent from FIG. 1, the thick portion 32 is thicker than the thick portion 34. The thick portions 32 and 34 have faces opposite to each other in the diameter direction of the housing body 26. These faces are formed into flat faces and are parallel to the longitudinal axis of the housing body 26.

In the thick portion 32, three through-holes 36, 38 and 40 are formed, which are arranged along the longitudinal axis of the housing body 26. As is obvious from FIG. 1, the through-hole 36 located in the center of the thick portion 32 extends in a direction orthogonal to the longitudinal axis of the housing body 26 within the thick portion 32, and has an inner end that opens in the flat face of the thick portion 32. The through-holes 38 and 40 located on both sides of the through-hole 36 extend through the thick portion 32 diagonally at a given angle relative to an axis of the middle through-hole 36. Each of the through-holes 38 and 40 has an inner end that opens in the flat face of the thick portion 32. The inner ends of the through-holes 36, 38 and 40 are arranged collinear with one another, extending along the longitudinal axis of the housing body 26. The inner ends of the through-holes 38 and 40 are located adjacently to the inner end of the through-hole 36.

One through-hole 42 for an inlet port is formed in the thick portion 34. The through-hole 42 extends through the thick portion 34 in a direction orthogonal to the longitudinal axis of the housing body 26, and has an inner end that opens in the flat face of the thick portion 34. As is clear from FIG. 1, the inner end of the through-hole 42 and that of the through-hole 36 are positioned so as to be misaligned with each other in the direction of the longitudinal axis of the housing body 26.

The thick portion 32 is thicker than the thick portion 34 as mentioned above. For that reason, despite having the three through-holes 36, 38 and 40, the thick portion 32 maintains sufficient strength.

The inside of each end portion of the housing body 26 is formed as a storage chamber 44. These storage chambers 44 sandwich the valve chamber 30 from both sides. Each of the storage chambers 44 communicates with the valve chamber 30 and has a circular cross-section. A plurality of threaded holes 46 are formed in both end faces of the housing body 26. The threaded holes 46 are arranged at equal distances in a circumferential direction of the housing body 26.

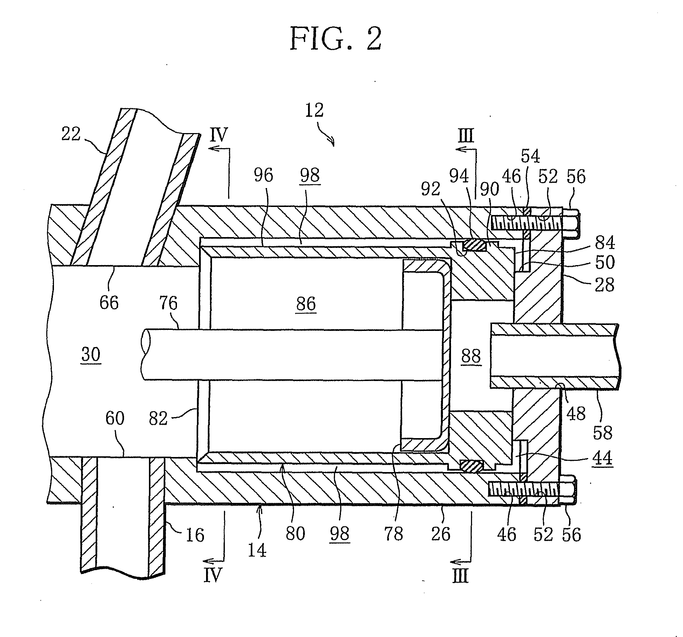

The two end plates 28 have a circular shape, and each has a mounting hole 48 in the center. The mounting hole 48 extends through the corresponding end plate 28. As is clear from FIG. 2, a circular protruding portion 50 is formed in an inner surface of each of the end plates 28, and an inner end of the mounting hole 48 opens in an inner end face of the protruding portion 50. The end plate 28 has a plurality of bolt holes 52 in a rim thereof. The bolt holes 52 are so arranged as to coincide with their respective threaded holes 46. A gasket 54 is sandwiched between each of the end plate 28 and the corresponding end face of the housing body 26. The end plates 28 are fixed to the housing body 26 by bolts 56 being screwed into the threaded holes 46 through the bolt holes 52.

As is apparent from FIG. 1, tube-like port members 16, 18, 20 and 22 are inserted in the through-holes 42, 36, 38 and 40. The port members have open ends that open into the valve chamber 30. In other words, the open ends of the port members 16, 18, 20 and 22 are positioned on the same plane as the flat faces of the thick portions 32 and 34.

The port member 16 is inserted in the through-hole 42 and fixed to the thick portion 34 by brazing. The open end of the port member 16 is used as an inlet 60. The port member 16 functions as an input port.

The port member 18 is inserted in the through-hole 36 and fixed to the thick portion 32 by brazing. The open end of the port member 18 is used as a middle connection opening (outlet 62). The port member 18 functions as an output port.

The port member 20 is inserted in the through-hole 38 and fixed to the thick portion 32 by brazing. The open end of the port member 20 is used as a connection opening 64 located on the external heat exchanger side. The port member 20 functions as a switching port for switching the flow direction of the refrigerant with respect to the valve chamber 30.

The port member 22 is inserted in the through-hole 40 and fixed to the thick portion 32 by brazing. The open end of the port member 22 is used as a connection opening 66 located on the internal heat exchanger, and functions as a switching port for switching the flow direction of the refrigerant with respect to the valve chamber 30.

As illustrated in FIG. 1, the port member 16, namely, the input port, is connected to a discharge port of the compressor 4 through a high-pressure section P1 of the refrigerant circulation pathway P. The port member 18, namely, the output port, is connected to a suction port of the compressor 4 through a low-pressure section P2 of the refrigerant circulation pathway P. The port members 20 and 22 are connected to each other through a switching section P3 of the refrigerant circulation pathway P. The external heat exchanger 6, the expansion valve 8 and the internal heat exchanger 10 are interposed in the switching section P3 in the order named from the port member 20 side.

The slide valve element 24 is set in the valve chamber 30. The slide valve element 24 is reciprocated by a drive source along the longitudinal axis of the valve chamber 30, namely, of the housing body 26. The drive source will be described later.

The slide valve element 24 includes a valve body 68.

The valve body 68 has a flat sliding face 72, which is in tight contact with and slidable on the flat face of the thick portion 32. The sliding face 72 has a recessed are 74 in the center. The recessed area 74 is formed of an arc-shaped groove extending along the longitudinal axis of the housing body 26. The recessed area 74 is of such size, or length, as to cover the outlet 62 and a selected one (64 or 66) of the connection openings. On this account, when the slide valve element 24 is located on the right side of the valve chamber 30 as viewed into FIG. 1, in other words, when the four-way valve is switched to a cooling position, the recessed area 74 of the slide valve element 24 connects the outlet 62 to the connection opening 66 on the internal heat exchanger side. When the slide valve element 24 is located on the left side of the valve chamber 30, in other words, when the four-way valve is switched to a heating position, the recessed area 74 of the slide valve element 24 connects the outlet 62 to the connection opening 64 on the external heat exchanger side.

Since the recessed area 74 is formed of an arc-shaped groove, and the switching ports serving as the connection openings 64 and 66 are obliquely disposed, the refrigerant is allowed to pass through the recessed area 74 smoothly. It therefore should be noted that the recessed area 74 does not become a great resistance to the flow of the refrigerant passing through the four-way valve.

The valve body 68 has a mounting portion 70 on the opposite side to the sliding face 72, and is fixed to a valve rod 76 of the slide valve element 24 at the mounting portion 70. The valve rod 76 is concentrically disposed in the housing body 26, or on the longitudinal axis of the housing body 26, and extends through the valve chamber 30.

Both ends of the valve rod 76 are thus protruding into the storage chamber 44 and connected to the drive source. Specifically, the drive source includes a drive mechanism that is disposed in each of the storage chambers 44. These drive mechanisms are connected to both ends of the valve rod 76. As the drive mechanisms have symmetric configurations, details will be described below with a focus on one of the drive mechanisms.

As is obvious from FIG. 2, the drive mechanism includes a sleeve 80, which is concentrically disposed in the storage chamber 44. The sleeve 80 has an open end 82 positioned on the valve chamber 30 side and an end wall 84 positioned on the end plate 28 side, and defines a cylinder bore 86 inside thereof. The cylinder bore 86 is formed coaxially with the sleeve 80.

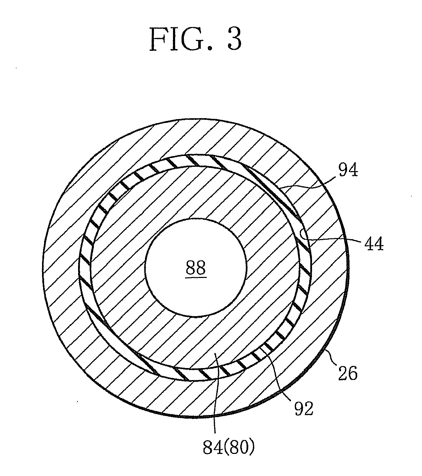

The open end 82 is in contact with the thick portions 32 and 34, and the end wall 84 with the protruding portion 50 of the end plate 28. The end wall 84 has an outer circumferential surface in which a circular bulging portion 90 is formed. The bulging portion 90 has an external diameter that is slightly larger than an external diameter of the sleeve 80. A circumferential groove 92 is formed in an outer circumferential surface of the bulging portion 90. An O-ring 94 is set in the circumferential groove 92. The sleeve 80 is thus supported by an inner circumferential surface of the storage chamber 44, or the housing body 26, through the O-ring 94. As illustrated in FIG. 3, the O-ring 94 air-tightly plugs a gap between the outer circumferential surface of the bulging portion 90 and the inner circumferential surface of the storage 44.

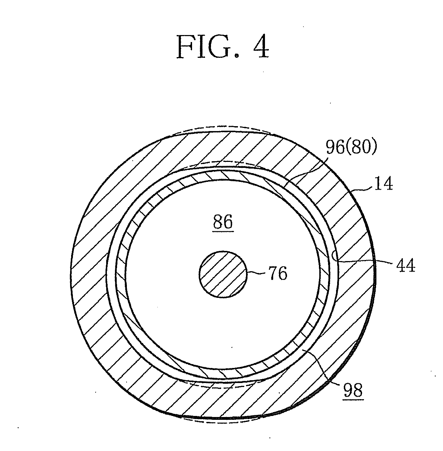

The sleeve 80 has a circumferential wall 96 expanding from the open end 82 to the end wall 84. As illustrated in FIG. 4, there is secured an annular gap 98 between an outer circumferential surface of the circumferential wall 96 and the inner surface of the storage chamber 44.

A piston 78 is slidably fitted in the cylinder bore 86 of the sleeve 80, and is connected to one end of the valve rod 76. According to the present embodiment, the valve rod 76 is a piston rod common to the pistons 78 of the right and left drive mechanisms.

The piston 78 has a cup-like shape. A pressure chamber is formed between the piston 78 and the end wall 84 within the cylinder bore 86 that opens toward the valve chamber 30. A face of the piston 78, which is opposite to the end wall 84, is formed as a pressure-receiving face. When pressure is applied onto the pressure-receiving face of the piston 78, the piston 78 makes a sliding movement toward the valve chamber 30 within the cylinder bore 86 along with the valve rod 76.

As described above, the piston 78 is disposed not in the storage chamber 44 but in the cylinder bore 86 of the sleeve 80. Moreover, the annular gap 98 is produced between the housing body 26 and the sleeve 80. For that reason, when the port member 16 or 22 is brazed to the housing body 26, the outer circumferential wall of the housing body 26 is deformed by heat at a portion near the port member 16 or 22, and distortion sometimes occurs in the storage chamber 44 as illustrated in FIG. 4. The distortion in the storage chamber 44, however, does not affect at all the insertion of the sleeve 80 into the storage chamber 44 afterwards. Since there is the annular gap 98 between the housing body 26 and the sleeve 80, the gap 98 allows the distortion in the storage chamber 44. The sleeve 80 is then inserted in the storage chamber 44 without getting stuck on the inner circumferential surface of the storage chamber 44, and is accordingly set in a proper position within the storage chamber 44. Consequently, the distortion in the storage chamber 44 does not disable the assembly of the four-way valve. After the four-way valve is assembled, the piston 78 can make a smooth sliding movement within the cylinder bore 86 of the sleeve 80.

The sleeve 80 is provided with the O-ring 94 only in the outer circumferential surface of the end wall 84 thereof. When the sleeve 80 is inserted into the storage chamber 44 from the open end thereof, the distance of sliding movement of the O-ring 94 against the inner circumferential surface of the storage chamber 44 is short. The O-ring 94 is therefore not damaged.

The drive mechanism includes a pilot pressure actuator that drives the piston 78, which will be described below.

The actuator includes a pilot pressure chamber 88. The pilot pressure chamber 88 is formed of a through-hole penetrating the end wall 84 of the sleeve 80.

The pilot pressure chamber 88 is connected to a pilot pressure supply device, which is shared with the pilot pressure chambers 88 of the right and left drive mechanisms.

More concretely, the pilot pressure supply device is provided with a pair of tube-like port members 58. The port members 58 are inserted in the mounting holes 48 of the valve housing 14 and fixed to the end plate 28, for example, by brazing. As is clear from FIGS. 1 and 2, the port members 58 have inner ends located inside their respective pilot pressure chambers 88. In FIG. 1, the right and left port members 58 are provided with reference marks 58R and 58L as well.

A pilot pipe P5 extends from the port member 58R and is connected to an electromagnetic valve 100. To be more specific, the electromagnetic valve 100 is a 4-port 2-position direction-switching valve. The pilot pipe P5 is connected to a port 101 of the electromagnetic valve 100.

A pilot pipe P6 extends from a port 102 of the electromagnetic valve 100 and is connected to the port member 58L. A pilot pipe P7 extends from a port 103 of the electromagnetic valve 100 and is connected to the port member 16. A pilot pipe P8 extends from a port 104 of the electromagnetic valve 100 and is connected to the port member 18.

When the electromagnetic valve 100 is switched to the cooling position shown in FIG. 1, the port 101 and the port 104 communicate with each other, and the port 102 and the port 103 communicate with each other. When the electromagnetic valve 100 is switched from the cooling to the heating position, the port 101 and the port 103 communicate with each other, and the port 102 and the port 104 communicate with each other.

As is apparent from the layout of the pilot pipes P5 to P8, the port 103 is supplied with high pressure of the refrigerant discharged from the compressor 4, namely, discharge pressure. The port 104 is supplied with low pressure of the refrigerant sucked into the compressor 4, namely, suction pressure. In result, the ports 101 and 102 are supplied with discharge or suction pressure according to the switching position of the electromagnetic valve 100. The right and left pilot pressure chambers 88 can be supplied with discharge or suction pressure through their respective port members 58.

In other words, when the electromagnetic valve 100 is switched to the cooling position, the pilot pressure chamber 88 on the left side is supplied with discharge pressure, while the pilot pressure chamber 88 on the right side is supplied with suction pressure. In this case, the piston 78 and the valve rod 76 are shifted to the right side due to pressure difference between the discharge and suction pressures. This means that the slide valve element 24 is shifted to the right side, and the outlet 62 and the connection opening 66 on the internal heat exchanger side communicate with each other through the recessed area 74 of the slide valve element 24.

When the electromagnetic valve 100 is switched to the heating position, the pilot pressure chamber 88 on the right side is supplied with discharge pressure, while the pilot pressure chamber 88 on the left side is supplied with suction pressure. In this case, the piston 78 and the valve rod 76, or the slide valve element 24, is shifted to the left side, and the outlet 62 and the connection opening 64 on the external heat exchanger side communicate with each other through the recessed area 74 of the slide valve element 24. In this manner, in response to the switching operations of the electromagnetic valve 100, the slide valve element 24 of the four-way valve 12 makes a reciprocating movement, to thereby control the flow direction of the refrigerant circulating through the refrigerant circulation pathway P (P1 to P3).

If the air conditioner 2 is controlled to perform the cooling operation, the electromagnetic valve 100 is switched to the cooling position. The slide valve element 24 is positioned on the right side as viewed into FIG. 1. The port members 18 and 22 are connected to each other, and the port members 16 and 20 are connected to each other through the valve chamber 30. In this case, a high-temperature and high-pressure gas-phase refrigerant that is discharged from the compressor 4 is supplied to the external heat exchanger 6. When the gas-phase refrigerant passes through the external heat exchanger 6, the gas-phase refrigerant is refrigerated to be liquefied. The liquid-phase refrigerant is supplied from the external heat exchanger 6 to the expansion valve 8, and is depressurized by the expansion valve 8, thereby flowing into the internal heat exchanger 10. In the internal heat exchanger 10, the liquid-phase refrigerant is evaporated while absorbing the heat of air passing through the internal heat exchanger 10, and is turned into a low-pressure gas-phase refrigerant. Thereafter, the low-pressure gas-phase refrigerant passes through the four-way valve 12 and heads to the compressor 4. The air conditioner then repeats the foregoing cycle, performing the cooling operation.

If the air conditioner 2 is controlled to perform the heating operation, the electromagnetic valve 100 is switched to the heating position. The slide valve element 24 of the four-way valve 12 is positioned on the left side as viewed into FIG. 1. In this case, the port members 18 and 20 are connected to each other through the slide valve element 24, and the port members 16 and 22 through the valve chamber 30. Accordingly, the flow direction of the refrigerant in the refrigerant circulation pathway P is opposite to that in the cooling operation, and the high-temperature and high-pressure gas-phase refrigerant from the compressor 4 is supplied to the internal heat exchanger 10. In the internal heat exchanger 10, the gas-phase refrigerant releases heat into the air passing through the internal heat exchanger 10 to be solidified, and is turned into a liquid-phase refrigerant. In result, internal air is heated. The liquid-phase refrigerant is supplied from the internal heat exchanger 10 to the expansion valve 8, and is depressurized by the expansion valve 8, thereby turning into a low-temperature and low-pressure liquid-phase refrigerant. The liquid-phase refrigerant then becomes a low-pressure gas-phase refrigerant after passing through the external heat exchanger 6. This gas-phase refrigerant heads to the compressor 4 via the four-way valve 12. The air conditioner then repeats the foregoing cycle, performing the heating operation.

The invention is not limited to the one embodiment described above, and may be modified in various ways.

For example, the four-way valve 12, the pipes of the refrigerant circulation pathway P and the like can be made of materials obtained by subjecting aluminum to surface finishing or of those having a high resistance to ammonia, such as stainless steel. It is one idea to provide an electroless Ni-P-SiC composite coating onto the surface of aluminum by plating. The electroless Ni-P-SiC composite coating is excellent in self-lubricating property, wear resistance, and corrosion resistance, and is high in hardness. Especially, if subjected to heat treating, the coating is further hardened.

The four-way valve 12 includes a slight gap that is constantly secured between the end wall 84 of the sleeve 80 and the protruding portion 50 of the end plate 28. In this case, since the sleeve 80 is merely supported on the inner circumferential surface of the storage chamber 44 only through the O-ring 94, the sleeve 80 is allowed to incline within the storage chamber 4. If the housing body 26 is wholly curved due to heat deformation, despite the distortion of the housing body 26, the inclination of the sleeve 80 enables the axis of the piston 78 and the valve rod 76 to coincide with the axis of the sleeve 80, and also ensures a smooth sliding movement of the piston 78 within the sleeve 80.

The O-ring 94 may be disposed in the housing body 26. In this case, a retention groove is formed in the inner circumferential surface of the housing body 26, and the O-ring is retained in this retention groove.

The four-way valve may be applied to a refrigerant circulation path through which refrigerant other than ammonia refrigerant flows.

The control valve of the invention may be applied to another valve, such as an opening/closing valve and a three-way valve, instead of the four-way valve.

### Reference marks

- 2: air conditioner
- 4: compressor
- 6: external heat exchanger
- 8: expansion valve
- 10: internal heat exchanger
- 12: four-way valve
- 14: valve housing
- 16,: 18, 20, 22 port member
- 24: slide valve element
- 26: housing body
- 28: end plate
- 30: valve chamber
- 32, 34: thick portion
- 36, 38, 40, 42: through-hole
- 44: storage chamber
- 76: valve rod
- 78: piston
- 80: sleeve
- 94: O-ring
- 96: circumferential wall
- 98: gap
- 100: electromagnetic valve

## Claims

1. A control valve comprising:
a valve housing in the shape of a hollow cylinder, the valve housing having a valve chamber defined inside the valve housing and an external wall surrounding the valve chamber;
a plurality of port members fixed to the external wall, each of the port members having an opening that opens in an inner face of the valve chamber;
a slide valve element placed in the valve chamber and slidable on the inner face of the valve chamber in an axis direction of the valve housing, the slide valve element controlling communication between the openings of the port members according to a sliding position thereof; and
a drive mechanism disposed adjacently to the valve chamber within the valve housing, for driving the slide valve element, wherein
the drive mechanism includes:
a sleeve disposed along an axis of the valve housing, the sleeve defining a cylinder bore therein;
a movable member slidably fitted in the cylinder bore and connected to the slide valve element;
an actuator for sliding the movable member; and
a supporting device supporting the sleeve with respect to the valve housing and allowing the sleeve to incline.

2. The control valve according to claim 1, wherein
the sleeve has
an open end that opens toward the valve chamber, and an end wall located opposite to the open end, wherein:
the supporting device has
a support point at which the end wall of the sleeve is supported with respect to the inner surface of the valve housing, and
an annular gap defined between the valve housing and the sleeve and extending from the open end of the sleeve to the support point.

3. The control valve according to claim 2, wherein the supporting device has a ring-shaped seal member arranged at the support point.

4. The control valve according to claim 3, wherein the supporting device further has a retention groove formed in an outer circumferential surface on the end wall of the sleeve and retaining the seal member.

5. The control valve according to claim 4, wherein the sleeve has a ring-shaped bulging portion formed in the outer circumferential surface of the end wall of the sleeve, and the retention groove is formed in an outer circumferential surface of the bulging portion.

6. The control valve according to claim 5, wherein the control valve comprises three or more port members.

7. The control valve according to claim 6, wherein
one of the port members is an introduction port member with an inlet, for introducing fluid into the valve chamber;
the other port members are switching port members for switching a flow direction of the fluid by means of the slide valve element, each of the other port members having a connection opening that opens into the valve chamber;
the inlet is arranged away from the connection openings in a circumferential direction of the valve housing, whereas the connection openings are arranged in line along the axis of the valve housing; and
the drive mechanism is disposed each side of the valve chamber, for moving the slide valve element along the axis of the valve housing in opposite directions to each other in order to control connection between the connection openings.

8. The control valve according to claim 7, wherein the control valve is a four-way valve having three connection openings; and
the slide valve element has a first switching position for connecting the middle connection opening to either one of the two remaining connection openings, and a second switching position for connecting the middle connection opening to the other of the two remaining connection openings.

9. The control valve according to claim 8, wherein the two port members having the two remaining connection openings are inclined relative to an axis of the port member having the middle connection opening, and the connection openings of the two port members are positioned adjacently to the connection opening of the middle port member.

10. The control valve according to claim 9, wherein the movable member has a piston disposed in the cylinder bore, and a piston rod connected to the piston, the piston rod being attached with the slide valve element.

11. The control valve according to claim 10, wherein
the actuator has a pilot pressure chamber formed in the end wall of the sleeve, and the pilot pressure chamber faces the inside of the cylinder bore and is supplied with pilot pressure for driving the piston.

12. The control valve according to claim 11, wherein the port members are mounted on the valve housing by using mounting means that applies heat load to the external wall of the valve housing.

13. An air conditioner comprising:
a refrigerant circulation pathway, and
the control valve claimed in claim 12, which is interposed in the circulation pathway and switches the flow direction of the refrigerant circulating through the circulation pathway.

14. The air conditioner according to claim 13, further comprising:
a pilot pressure supply circuit connecting a high-pressure section of the circulation pathway to a selected one of the pilot pressure chambers.
